# EUROPEAN PATENT SPECIFICATION

(11) **EP 0 381 337 B1**
(45) Date of publication and mention of the grant of the patent: **27.03.1996**
(21) Application number: 90300532.0
(22) Date of filing: 18.01.1990
(51) Int. Cl.: G01N 27/00

(54) **Apparatus and method for simultaneously effecting electro-chemical measurement and measurement of tunnelling current and tunnel probe therefor**
Apparat und Methode zum gleichzeitigen Messen von elektrochemischen und Tunnel-Effekten und dazugehörige Tunnelsonde
Appareil et méthode pour effectuer simultanément des mesures électro-chimiques et des mesures de courant-tunnel, et sonde à effet tunnel s'y rapportant

(30) Priority: 31.01.1989 JP 21550/89
(43) Date of publication of application: 08.08.1990
(73) Proprietor: SEIKO INSTRUMENTS INC., Tokyo 136 (JP)
(72) Inventor: Tomita, Eisuke, Koto-ku, Tokyo (JP)
(74) Representative: Sturt, Clifford Mark

(56) References cited:
- EP-A- 0 318 289
- ANALYTICAL CHEMISTRY, vol. 60, no. 8, 15 April 1988, COLUMBUS, US, pages 751-758; FU-REN F.FAN ET AL: "Scanning tunneling microscopic studies of platinium electrode surfaces"
- REVIEWS OF MODERN PHYSICS vol. 59, no. 3, July 1987, pages 615 - 625; G.BINNIG ET AL.: "Scanning tunneling microscopy-from birth to adolescence"
- JAPANESE JOURNAL OF APPLIED PHYSICS, LETTERS, vol. 26, no. 11, November 1987, TOKYO, JP, pages 1853-1855; S.MORITA ET AL.: "Construction of a scanning tunneling microscope for electrochemical studies"
- SOVIET INVENTIONS ILLUSTRATED, Derwent Publications Ltd., Week E17, Abstract Nr 34665, 9 June 1982, London, GB; & SU-A-837712
- PATENT ABSTRACTS OF JAPAN vol. 13, no. 63 (C-568)(3411) 13 February 1989 & JP-A-63 256 138

## Description

This invention relates to apparatus and method for simultaneously effecting electro-chemical measurement and measurement of tunnelling current and tunnel probes therefor.

More specifically, the present invention relates to an apparatus wherein a sample is subjected to potential control in a solution to effect electro-chemical measurement and, at the same time, to detect tunnelling current flowing between the sample and a tunnel probe. More particularly, the present invention pertains to a scanning tunnel microscope which produces an image of the surface of a sample on the basis of the detected tunnelling current during electro-chemical measurement.

It is a common technique that a sample is subjected to potential control to detect current flow and thereby clarify an electro-chemical reaction. Apparatus that utilise this technique are commercially available in the form of potentiostats, polarography devices, etc. It is also a common method that a voltage is applied between a sample and a tip of a probe thereby to detect tunnelling current. Further, means for obtaining the image of the surface of a sample on the basis of detected tunnelling current is known as a scanning tunnel microscope. One scanning tunnel microscope is disclosed in US-A-4,343,993. Measurement using such a scanning tunnel microscope has, in the past, been conducted under a super high vacuum but recently it has become possible to effect measurement at atmospheric pressure or in a solution.

In the Japanese Journal of Applied Physics, vol., 26, No. 11, 1 November 1987, Tokyo, pages L1853-L1855, an experiment is described where a scanning tunnelling microscope image of a sample is obtained in an electrochemical cell. Electrochemical treatment of the sample is also described. The tunnel probe used in the experiment is composed of PtIr. There is no disclosure of a tunnel probe formed from a material selected from gold, a gold alloy containing gold as the main component, carbon, and a carbon compound.

Since platinum is mainly used to form conventional tunnel probes, a window of the tunnel probe itself is relatively narrow and it is, therefore, difficult to identify a substance deposited on an electrode in solution.

According to one aspect of the present invention, there is provided an apparatus for effecting electro-chemical measurement and measurement of a tunnelling current simultaneously, the apparatus comprising a tunnel probe formed from a material selected from gold, a gold alloy containing gold as the main component, carbon, and a carbon compound; means for setting a potential of a sample and for detecting a current flowing between the sample and a counter electrode; means for changing the distance between the sample and the tunnel probe; and means for setting the potential of the tunnel probe and for detecting a tunnelling current flowing due to the potential difference between the tunnel probe and the sample.

According to another aspect of the present invention, there is provided a tunnel probe for use in an apparatus which employs an electro-chemical cell having a sample, a counter electrode, and a reference electrode, which are disposed in a solution to effect electro-chemical measurement or measurement of a tunnelling current, said probe being characterised by being formed from a material selected from gold, a gold alloy containing gold as the main component, carbon, and a carbon compound.

According to another aspect of the invention, there is provided a method for effecting tunnel current measurement and electro-chemical measurement simultaneously in an electro-chemical cell which has a sample and a counter electrode in a solution, the method comprising setting the potential of the sample and detecting a current flowing between the sample and the counter electrode; using a tunnel probe, formed from a material selected from gold, a gold alloy containing gold as the main component, carbon, and a carbon compound, in the solution; setting the potential of the tunnel probe; changing the distance between the sample and the tunnel probe; and detecting a current flowing due to the potential difference between the tunnel probe and the sample.

The invention also relates to use of a tunnel probe, formed from a material selected from gold, a gold alloy containing gold as its main component, carbon, and a carbon compound, for measuring tunnel current simultaneously with electro-chemical measurement in an electro-chemical cell.

According to circumstances, the present invention further includes means which enables scanning of the potential of the sample and the potential of the tunnel probe.

The present invention may include a scanning tunnel microscope in which, with the potential difference between a sample and atunnel probe being kept constant, the surface of the sample is scanned with the tunnel probe in the directions of the X- and Y-axes whilst effecting Z-axis control to control the distance between the tunnel probe and the sample so that the detected tunnelling current is substantially constant, and the position of the tunnel probe is expressed as a three dimensional representation, thereby giving the image of the sample surface during electro-chemical measurement.

By forming the tunnel probe from a material selected from gold, a gold alloy containing gold as the main component, carbon, and a carbon compound, it is possible to enlarge by a substantial margin the potential region (window) where no electro-chemical reaction of the tunnel probe itself occurs, thus enabling identification of a substance deposited on the electrode in a solution or an impurity attached thereto.

By virtue of the present invention, it is possible to fix the sample potential and measure the tunnelling current. Thus, an electrode reaction that takes place on the basis of the sample potential can be analysed by studying change in the tunnelling current, and by scanning the sample surface so that the level of the tunnelling current is kept constant. Thus it is possible to analyse the structure of the sample surface. The known scanning tunnel microscope for measurement in a solution is merely used to observe the sample surface. According to the present invention, however, it is possible to clarify the nature of an electrode reaction by detection of the tunnelling current under the control of the sample potential.

The following is a description of the function performed when the sample potential is scanned and the potential difference between the sample and a tip of the tunnel probe is made constant. In general, an electrode reaction is analysed on the basis of a potential-current curve (cyclic voltamogram) of a sample. However, employment of the apparatus of the present invention enables measurement of the tunnelling current at each potential on the cyclic voltamogram and also makes it possible to study the structure of the sample surface at each potential and hence it is possible to analyse an electro-chemical reaction in correspondence to the electrode surface structure.

Further, a material such as gold, a gold alloy containing gold as the main component, carbon, and a carbon compound, has a wide window, i.e. 1.0 to 2.0 V. The fact that the window of the tunnel probe can be enlarged means that it is possible to enlarge the potential range within which the potential of the tunnel probe can be changed when a substance deposited on the electrode in solution is identified by changing the potential of the tunnel probe and determining the energy level of the substance on the basis of change in the tunnelling current flowing at that time.

A tunnel probe that is made from gold has a relatively wide window and is therefore suitable for the present invention. However, a tunnel probe that is made from a gold alloy containing gold as the main component which is obtained by adding trace amounts of Pd, Pt and W with a view to improving hardness and strength is also usable in the present invention.

Examples of tunnel probes made from carbon or a carbon compound which are suitable in the present invention are made from a high purity graphite impregnated with wax or the like, or made from pyrolytic graphite produced by thermal decomposition of hydrocarbon at a high temperature and reduced pressure, or made from carbon paste consisting of a binder, for example, epoxy added to graphite powder, or made from a carbon compound obtained by adding a trace amount of boron carbide to carbon.

Further, it is preferable to form an insulating film, for example, glass coating, over the tunnel probe of the present invention except in the region of the tip of the probe.

The invention is illustrated, merely by way of example, in the accompanying drawings, in which:-
Figure 1 is a sectional view of a tunnel probe of an apparatus according to the present invention for simultaneously effecting electro-chemical measurement and measurement of a tunnelling current;
Figure 2 is a graph showing a current-potential curve of a gold electrode in 1M H₂SO₄;
Figure 3 is a graph showing a current-potential curve of a platinum electrode in 0.5M H₂SO₄; and
Figure 4 is a schematic view of an apparatus according to the present invention for simultaneously effecting electro-chemical measurement and measurement of tunnelling current.

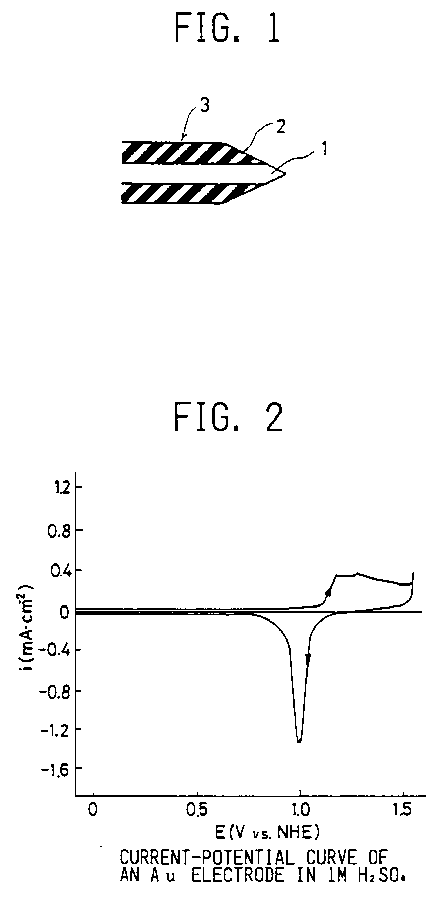

Figure 1 is a sectional view of a tunnel probe 3 of an apparatus according to the present invention for simultaneously effecting electro-chemical measurement and measurement of tunnelling current. A gold wire having a diameter of 0.3 mm is subjected to mechanical polishing to form a sharp, electrically conductive tip 1. A glass coating is applied to the probe 3 except in the area of the tip 1 to form an insulating layer 2.

Figure 2 shows a current-potential curve measured in 1M H₂SO₄ solution using the tunnel probe 3. As will be clear from Figure 2, the potential region (window) where no electro-chemical reaction occurs is enlarged to a range of from -0.1 to +0.9 V, i.e. 1.0 V.

Tunnel probes 3 similar to those of Figure 1 were prepared except that, instead of gold, a gold alloy (Pd: 0.25 wt%, Pt: 0.25 wt%, W: 0.25 wt%, Au: balance), a high purity graphite (glassy carbon), and a carbon compound formed by adding 3 wt% of boron carbide to carbon was used. With these tunnel probes 3, windows were measured in the same way as in Figure 2. The results of the measurement are shown in Table 1.

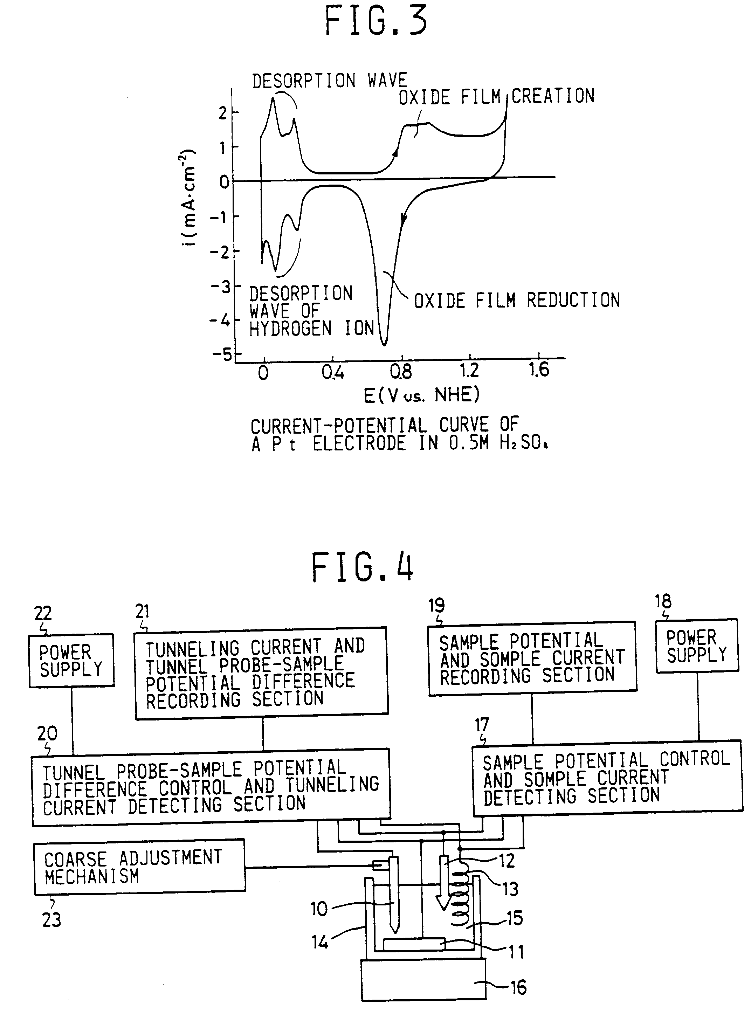

A tunnel probe 3 similar to that of Figure 1 was made except that platinum was used instead of gold. Figure 3 shows a current-potential curve measured in 0.5M H₂SO₄ solution using such a tunnel probe. As will be clear from Figure 3, the window where no electro-chemical reaction occurs is exceedingly narrow, i.e. a range from +0.3 to +0.6 V (0.3 V).

**TABLE 1**

| | Present Invention | | | | Comparative |
|---|---|---|---|---|---|
| Probe material | Au | Gold alloy | Graphite | Carbon compound | Pt |
| Window | 1.0 V | 1.0 V | 2.3 V | 2.0 V | 0.3 V |

It will be seen from Table 1 that, by forming a tunnel probe from gold, a gold alloy, carbon or a carbon compound, it is possible to attain a markedly wider window than in the case of a conventional platinum tunnel probe.

Figure 4 is a schematic view of an apparatus according to the present invention for simultaneously effecting electro-chemical measurement and measurement of tunnelling current. An electro-chemical cell 14 has a sample 11, a reference electrode 12, a counter electrode 13 and a tunnel probe 3 disposed therein and is filled with a solution 15.

The reference electrode 12 is of the type generally employed in electro-chemistry. Typical examples are SCE and silver-silver chloride electrodes. The tunnel probe 3 is formed from a material selected from among gold, a gold alloy, carbon or a carbon compound, subjected to mechanical polishing or stepwise polishing to form a sharp tip and coated with an insulating film, for example, a glass coating, except in the area of the tip.

The electro-chemical cell 14 is installed on a shock absorbing desk 16 in order to prevent variation in the distance between the tunnel probe 3 and the sample 11 caused by external factors, for example, vibration.

The sample 11, the reference electrode 12 and the counter electrode 13 are connected to a sample potential control and sample current detecting section 17, thereby effecting potential setting of the sample 11 by use of a voltage supplied from a power supply 18, thus enabling electro-chemical measurement. The sample potential control and sample current detecting section 17 is connected to a sample potential and sample current recording section 19, thereby enabling recording of electro-chemical measurement, for example, a potential-current curve.

The tunnel probe 3, the sample 11, the reference electrode 12 and the counter electrode 13 are further connected to a tunnel probe sample potential difference control and tunnelling current detecting section 20, which is connected to the sample potential control and sample current detecting section 17 and where a potential difference between the tunnel probe 3 and the sample 11 is set by use of the voltage supplied from a power supply 22 and also a tunnelling current is detected. The tunnel probe sample potential difference control and tunnelling current detecting section 20 is connected to a tunnelling current and tunnel probe sample potential difference recording section 21 to effect recording.

In addition, a coarse adjustment mechanism 23 is installed to move the tunnel probe 3 to a distance from the sample 11 at which a tunnelling current flows between the tunnel probe 3 and the sample 11.

In one example, the tunnel probe was made of gold, the sample 11 was HOPG (High Order Pyrolytic Graphite), the solution was silver perchlorate and the counter electrode 13 was a silver wire. As a result, it was possible to obtain a scanning tunnel microscope image of deposition/fusion of silver at the surface of the HOPG sample in synchronism with the cyclic voltamogram.

Further, the surface of the sample 11 was subjected to scanning tunnel spectrophotometry to identify the deposit as silver.

With the apparatus according to the present invention described above, it is possible simultaneously to effect electro-chemical measurement and measurement of tunnelling current and hence it is possible to analyse an electro-chemical reaction in correspondence to the sample surface structure. Further, it is possible to enlarge the window of the tunnel probe by a relatively large margin in comparison with conventional platinum tunnel probes and it is therefore possible to identify the deposit on the sample surface in solution. Thus the apparatus is important in the fields of surface treating technology, semiconductors, etc.

## Claims

1. An apparatus for effecting electro-chemical measurement and measurement of a tunnelling current simultaneously, the apparatus comprising a tunnel probe formed from a material selected from gold, a gold alloy containing gold as the main component, carbon, and a carbon compound; means (17) for setting a potential of a sample (11) and for detecting a current flowing between the sample and a counter electrode (13); means (23) for changing the distance between the sample and the tunnel probe (3); and means (20) for setting the potential of the tunnel probe (3) and for detecting a tunnelling current flowing due to the potential difference between the tunnel probe (3) and the sample (11).

2. A tunnel probe for use in an apparatus which employs an electro-chemical cell (14) having a sample (11), a counter electrode (13), and a reference electrode (12), which are disposed in a solution (15), to effect electro-chemical measurement or measurement of a tunnelling current, said probe being characterised by being formed from a material selected from gold, a gold alloy containing gold as the main component, carbon, and a carbon compound.

3. A method for effecting tunnel current measurement and electro-chemical measurement simultaneously in an electro-chemical cell (14) which has a sample (11) and a counter electrode (13) in a solution (15), the method comprising setting the potential of the sample (11) and detecting a current flowing between the sample (11) and the counter electrode (13); using a tunnel probe (3), formed from a material selected from gold, a gold alloy containing gold as the main component, carbon, and a carbon compound, in the solution (15); setting the potential of the tunnel probe (3); changing the distance between the sample (11) and the tunnel probe (3); and detecting a tunnelling current flowing due to the potential difference between the tunnel probe (3) and the sample (11).

4. Use of a tunnel probe (3), formed from a material selected from gold, a gold alloy containing gold as its main component, carbon, and a carbon compound, for measuring tunnel current simultaneously with electro-chemical measurement in an electro-chemical cell (14).

5. An apparatus as claimed in claim 1, a tunnel probe as claimed in claim 2, a method as claimed in claim 3, or use of a tunnel probe as claimed in claim 4, characterised in that the tunnel probe is made of a gold alloy containing gold as the main component and trace amounts of Pd, Pt and W.

6. An apparatus as claimed in claim 1, a tunnel probe as claimed in claim 2, a method as claimed in claim 3, or use of a tunnel probe as claimed in claim 4, characterised in that the tunnel probe is made of graphite impregnated with wax.

7. An apparatus as claimed in claim 1, a tunnel probe as claimed in claim 2, a method as claimed in claim 3, or use of a tunnel probe as claimed in claim 4, characterised in that the tunnel probe is made from a carbon paste consisting of a binder added to graphite powder.

8. An apparatus as claimed in claim 1, a tunnel probe as claimed in claim 2, a method as claimed in claim 3, or use of a tunnel probe as claimed in claim 4, characterised in that the tunnel probe is made from a carbon compound obtained by adding a trace amount of boron carbide to carbon.

9. An apparatus, a tunnel probe, a method, or use of a tunnel probe as claimed in any preceding claim, characterised in that an insulating film is formed over the tunnel probe except in the region of a tip thereof.

## Patentansprüche

1. Einrichtung zum gleichzeitigen Durchführen einer elektrochemischen Messung und einer Messung eines Tunnelstroms, wobei die Einrichtung eine Tunnelsonde umfaßt, welche aus einem Material gebildet ist, das aus Gold, einer Goldlegierung, die Gold als die Hauptkomponente enthält, Kohlenstoff und einer Kohlenstoffverbindung ausgewählt ist, Mittel (17) zum Setzen eines Potentials einer Probe (11) und zum Erfassen eines Stroms, welcher zwischen der Probe und einer Gegenelektrode (13) fließt, Mittel (23) zum Ändern des Abstands zwischen der Probe und der Tunnelsonde (3) und Mittel (20) zum Setzen des Potentials der Tunnelsonde (3) und zum Erfassen eines Tunnelstroms, welcher aufgrund der Potentialdifferenz zwischen der Tunnelsonde (3) und der Probe (11) fließt.

2. Tunnelsonde zur Verwendung in einer Einrichtung, welche eine elektrochemische Zelle (14) verwendet, die eine Probe (11), eine Gegenelektrode (13) und eine Referenzelektrode (12) aufweist, welche in einer Lösung (15) angeordnet sind, um eine elektrochemische Messung oder eine Messung eines Tunnelstroms durchzuführen, wobei die Sonde dadurch gekennzeichnet ist, daß sie aus einem Material gebildet ist, das aus Gold, einer Goldlegierung, die Gold als die Hauptkomponente enthält, Kohlenstoff, und einer Kohlenstoffverbindung ausgewählt ist.

3. Verfahren zum gleichzeitigen Durchführen einer Tunnel-strommessung und einer elektrochemischen Messung in einer elektrochemischen Zelle (14), welche eine Probe (11) und eine Gegenelektrode (13) in einer Lösung (15) aufweist, wobei das Verfahren umfaßt: das Setzen des Potentials der Probe (11) und das Erfassen eines zwischen der Probe (11) und der Gegenelektrode (13) fließenden Stroms, das Verwenden einer Tunnelsonde (3), welche aus einem Material gebildet ist, das aus Gold, einer Goldlegierung, die Gold als die Hauptkomponente enthält, Kohlenstoff und einer Kohlenstoffverbindung ausgewählt ist, in der Lösung (15), das Setzen des Potentials der Tunnelsonde (3), das Ändern des Abstands zwischen der Probe (11) und der Tunnelsonde (3) und das Erfassen eines Tunnelstroms, welcher aufgrund der Potentialdifferenz zwischen der Tunnelsonde (3) und der Probe (11) fließt.

4. Verwendung einer Tunnelsonde (3), welche aus einem Material gebildet ist, das aus Gold, einer Goldlegierung, die Gold als ihre Hauptkomponente enthält, Kohlenstoff und einer Kohlenstoffverbindung ausgewählt ist, zur Messung eines Tunnelstroms gleichzeitig mit einer elektrochemischen Messung in einer elektrochemischen Zelle (14).

5. Einrichtung nach Anspruch 1, Tunnelsonde nach Anspruch 2, Verfahren nach Anspruch 3 oder Verwendung einer Tunnelsonde nach Anspruch 4, dadurch gekennzeichnet, daß die Tunnelsonde aus einer Goldlegierung hergestellt ist, die Gold als die Hauptkomponente und Spurenmengen von Pd, Pt und W enthält.

6. Einrichtung nach Anspruch 1, Tunnelsonde nach Anspruch 2, Verfahren nach Anspruch 3 oder Verwendung einer Tunnelsonde nach Anspruch 4, dadurch gekennzeichnet, daß die Tunnelsonde aus Graphit hergestellt ist, das mit Wachs imprägniert ist.

7. Einrichtung nach Anspruch 1, Tunnelsonde nach Anspruch 2, Verfahren nach Anspruch 3 oder Verwendung einer Tunnelsonde nach Anspruch 4, dadurch gekennzeichnet, daß die Tunnelsonde aus einer Kohlenstoffpaste hergestellt ist, die aus einem zu einem Graphitpulver hinzugefügten Bindemittel besteht.

8. Einrichtung nach Anspruch 1, Tunnelsonde nach Anspruch 2, Verfahren nach Anspruch 3 oder Verwendung einer Tunnelsonde nach Anspruch 4, dadurch gekennzeichnet, daß die Tunnelsonde aus einer Kohlenstoffverbindung hergestellt ist, welche durch Hinzufügen einer Spurenmenge von Borcarbid zu Kohlenstoff erhalten wird.

9. Einrichtung, Tunnelsonde, Verfahren oder Verwendung einer Tunnelsonde nach einem der vorangehenden Ansprüche, dadurch gekennzeichnet, daß ein Isolationsfilm über der Tunnelsonde gebildet ist, mit Ausnahme in dem Bereich einer Spitze derselben.

## Revendications

1. Appareil pour effectuer simultanément une mesure électrochimique et une mesure de courant à effet tunnel, l'appareil comportant une sonde à effet tunnel qui est en un matériau sélectionné parmi l'or, un alliage d'or contenant de l'or en tant que constituant principal, le carbone et un composé carboné; des moyens (17) destinés à mettre un échantillon (11) à un potentiel et à détecter un courant passant entre l'échantillon et une contre électrode (13); des moyens (23) destinés à changer la distance entre l'échantillon et la sonde (3) à effet tunnel; et des moyens (20) destinés à mettre la sonde (3) à effet tunnel au potentiel et à détecter un courant d'effet tunnel passant en raison de la différence de potentiel existant entre la sonde (3) à effet tunnel et l'échantillon (11).

2. Sonde à effet tunnel pour l'utilisation dans un appareil qui se sert d'une pile (14) électrochimique ayant un échantillon (11), une contre électrode (13) et une électrode (12) de référence, qui sont disposés dans une solution (15), pour réaliser une mesure électrochimique ou une mesure d'un courant d'effet tunnel, la sonde étant caractérisée par le fait d'être en un matériau sélectionné parmi l'or, un alliage d'or contenant de l'or à titre de constituant principal, le carbone et un composé carboné.

3. Procédé pour effectuer simultanément une mesure d'effet tunnel et une mesure électrochimique dans une pile (14) électrochimique qui a un échantillon (11) et une contre électrode (13) dans une solution (15), le procédé comprenant les étapes qui consistent à mettre l'échantillon (11) à un potentiel et à détecter un courant passant entre l'échantillon (11) et la contre électrode (13): à utiliser une sonde (3) à effet tunnel, formée en un matériau sélectionné parmi l'or, un alliage d'or contenant de l'or à titre de constituant principal, le carbone et un composé carboné, dans la solution (15); à mettre la sonde (3) à effet tunnel au potentiel; à changer la distance entre l'échantillon (11) et la sonde (3) à effet tunnel; et à détecter un courant d'effet tunnel passant en raison d'une différence de potentiel existant entre la sonde (3) à effet tunnel et l'échantillon (11).

4. Utilisation d'une sonde (3) à effet tunnel, formée en un matériau sélectionné parmi l'or, un alliage d'or contenant de l'or en tant que constituant principal, le carbone et un composé carboné, pour mesurer le courant d'effet tunnel simultanément à une mesure électrochimique dans une pile (14) électrochimique.

5. Appareil suivant la revendication 1, une sonde à effet tunnel suivant la revendication 2, un procédé suivant la revendication 3 ou l'utilisation d'une sonde à effet tunnel suivant la revendication 4, caractérisé en ce que la sonde à effet tunnel est en un alliage d'or qui contient de l'or à titre de constituant principal et des traces de Pd, Pt et W.

6. Appareil suivant la revendication 1, une sonde à effet tunnel suivant la revendication 2, un procédé suivant la revendication 3 ou l'utilisation d'une sonde à effet tunnel suivant la revendication 4, caractérisé en ce que la sonde à effet tunnel est en graphite imprégné de cire.

7. Appareil suivant la revendication 1, une sonde à effet tunnel suivant la revendication 2, un procédé suivant la revendication 3 ou l'utilisation d'une sonde à effet tunnel suivant la revendication 4, caractérisé en ce que la sonde à effet tunnel est en une pâte de carbone consistant en un liant qui a été ajouté à une poudre de graphite.

8. Appareil suivant la revendication 1, une sonde à effet tunnel suivant la revendication 2, un procédé suivant la revendication 3 ou l'utilisation d'une sonde à effet tunnel suivant la revendication 4, caractérisé en ce que la sonde à effet tunnel est en un composé carboné qui est obtenu en ajoutant une quantité trace de carbure de bore à du carbone.

9. Appareil, sonde à effet tunnel, procédé ou utilisation d'une sonde à effet tunnel suivant l'une des revendications précédentes, caractérisé en ce que une pellicule isolante est formée sur la sonde à effet tunnel à l'exception de la région d'une pointe de celle-ci.
